(19) Europäisches Patentamt
European Patent Office
Office européen des brevets

(11) EP 4 641 774 A1

(12) EUROPÄISCHE PATENTANMELDUNG

(43) Veröffentlichungstag:
29.10.2025 Patentblatt 2025/44

(21) Anmeldenummer: 24172570.4

(22) Anmeldetag: 25.04.2024

(51) Internationale Patentklassifikation (IPC):
H01M 50/103 (2021.01)     H01M 50/15 (2021.01)
H01M 50/342 (2021.01)

(52) Gemeinsame Patentklassifikation (CPC):
H01M 50/3425; H01M 50/103; H01M 50/15;
H01M 2220/20

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Cellforce Group GmbH
72138 Kirchentellinsfurt (DE)

(72) Erfinder:
• Der Erfinder hat auf sein Recht verzichtet, als
solcher bekannt gemacht zu werden.

(74) Vertreter: Müller Schupfner & Partner
Patent- und Rechtsanwaltspartnerschaft mbB
(Muc)
Bavariaring 11
80336 München (DE)

(54) OPTIMIERTE DIMENSIONIERUNG EINER BERSTMEMBRAN FÜR BATTERIEZELLEN

(57) Die Erfindung betrifft eine Membrananordnung für eine Batteriezelle, aufweisend ein Zellgehäuse mit einer prismatischen Form und eine Berstmembran, wobei das Zellgehäuse zumindest zwei Seitenflächen und zumindest zwei Schmalseiten aufweist, wobei das Zellgehäuse eine Länge, eine Breite und eine Höhe aufweist, und wobei die Berstmembran eine Membranlänge und eine Membranbreite aufweist, wobei die Berstmembran in oder an einer Schmalseite des Zellgehäuses positioniert ist, wobei die Berstmembran eine Membranlänge aufweist, welche einer 0,25-fachen bis 0,4-fachen Länge des Zellgehäuses entspricht und wobei die Berstmembran eine Membranbreite aufweist, welche einer 0,44-fachen bis 0,6-fachen Breite des Zellgehäuses entspricht. Des Weiteren betrifft die Erfindung eine Batteriezelle.

Fig. 1

**Beschreibung**

Die Erfindung betrifft eine Membrananordnung für eine Batteriezelle, aufweisend ein Zellgehäuse mit einer prismatischen Form und eine Berstmembran, wobei das Zellgehäuse zumindest zwei Seitenflächen und zumindest zwei Schmalseiten aufweist, wobei das Zellgehäuse eine Länge, eine Breite und eine Höhe aufweist, und wobei die Berstmembran eine Membranlänge und eine Membranbreite aufweist. Des Weiteren Betrifft die Erfindung eine Batteriezelle.

Elektrochemische Speicher, wie beispielsweise Lithium-Ionen-Batterien, können in bestimmten Grenzsituationen gasförmige Bestandteile freisetzen und somit einen Überdruck im Zellgehäuse einer oder mehrerer Batteriezellen aufbauen. Derartige Grenzsituationen können beispielsweise bei einer Überlastung oder einem Defekt der Batteriezelle auftreten. Innerhalb eines Zellgehäuses der Batteriezelle kann ein zu hoher Druck in einem Explosionsrisiko resultieren. Es sind bereits Batteriezellen mit integrierten Sollbruchstellen bekannt, welche bei einem vordefinierten Überdruck aufreißen und den Überdruck abbauen sollen. Beispielsweise können Sollbruchstellen in Form von Stanzungen oder Prägungen in Wandungen von Batteriezellengehäusen eingebracht werden, um einen risikobehafteten Überdruck zu vermeiden.

Weiterhin sind bereits Berstmembranen bekannt, welche außenseitig mit einem Zelldeckel des Zellgehäuses einer Batteriezelle verbunden werden. Problematisch bei einem außenseitigen Verbinden von Berstmembranen, insbesondere durch Schweißen, ist jedoch die Notwendigkeit einer bestimmten Materialstärke der Berstmembran und beispielsweise des Zelldeckels, um ein prozesssicheres Verbinden der Berstmembran mit dem entsprechenden Abschnitt der Batteriezelle zu ermöglichen. Die Erhöhung der Materialstärke von Zellgehäusen und Zelldeckeln zum Ermöglichen einer zuverlässigen Verbindung der Berstmembran steht jedoch einer Gewichtsminimierung und Steigerung der Energiedichte der Batteriezellen entgegen.

Aus diesem Grund werden Berstmembranen überwiegend in Zelldeckeln mit einer ausreichenden Materialstärke angeordnet, um dieses Problem zu umgehen. Der Zelldeckel bildet üblicherweise den höchsten Punkt der Batteriezelle und weist zusätzlich elektrische Anschlüsse auf. Je nach Anordnung und Ausrichtung der Zellstapel können entstehende Gase jedoch nur unzureichend oder nicht vollständig über den Zelldeckel abgeführt werden. Darüber hinaus können die elektrischen Anschlüsse ein Ausbilden eines Gaskanals zum Abführen von Gasen aus den Batteriezellen beeinträchtigen. Insbesondere kann eine in einen Zelldeckel eingebrachte Berstmembran wegen der elektrischen Verbindungen nur mit einem erhöhten Aufwand gasdicht mit externen Kanälen gekoppelt werden, um ein kontrolliertes Ableiten von gasförmigen Bestandteilen aus einem Batteriesystem oder einem Batteriemodul-Gehäuse mit einer Vielzahl von Batteriezellen zu ermöglichen.

Neben der Position der Berstmembran ist auch die ausreichende Dimensionierung der Berstmembran erforderlich. Eine Berstmembran mit einer zu geringen Querschnittsfläche kann die Geschwindigkeit der aus dem Zellgehäuse ausströmenden Gase drosseln und den Druckabbau verzögern. Eine Berstmembran mit einer zu groß dimensionierten Querschnittsfläche ermöglicht zwar einen schnellen Druckabbau, kann jedoch auch die mechanische Stabilität des Zellgehäuses beeinträchtigen.

Die vorliegende Erfindung hat daher die Aufgabe, eine Membrananordnung für eine Batteriezelle und eine Batteriezelle zu schaffen, welche eine optimale Dimensionierung der Berstmembran ermöglichen. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Membrananordnung für eine Batteriezelle bereitgestellt. Die Membrananordnung weist ein Zellgehäuse mit einer prismatischen Form und eine Berstmembran auf. Das Zellgehäuse weist zumindest zwei Seitenflächen und zumindest zwei Schmalseiten auf. Die Seitenflächen können hierbei eine gegenüber den Schmalseiten größere Fläche aufweisen.

Das Zellgehäuse weist eine Länge, eine Breite und eine Höhe auf. Die Berstmembran weist eine Membranlänge und eine Membranbreite auf. Die Berstmembran ist in oder an einer Schmalseite des Zellgehäuses positioniert.

Erfindungsgemäß weist die Berstmembran eine Membranlänge auf, welche einer 0,25-fachen bis 0,4-fachen Länge des Zellgehäuses entspricht. Darüber hinaus weist die Berstmembran eine Membranbreite auf weist, welche einer 0,44-fachen bis 0,6-fachen Breite des Zellgehäuses entspricht.

Die Dimensionierung der Berstmembran in Abhängigkeit von den Abmessungen des Zellgehäuses der Batteriezelle ermöglicht eine Maximierung des möglichen Querschnitts bzw. der Querschnittsfläche und der mechanischen Stabilität des Zellgehäuses.

Beispielsweise kann bei der Verwendung einer Membranbreite von einem 0,44-Fachen bis 0,6-Fachen der Breite des Zellgehäuses ausreichend umlaufenden Platz für eventuelle Dichtungen oder Schweißnähte zwischen der Berstmembran und dem Abschnitt des Zellgehäuses geschaffen werden.

Die Begrenzung der Membranlänge auf ein 0,25-Faches bis 0,4-Faches der Länge des Zellgehäuses kann dabei die Stabilität des Zellgehäuses optimieren.

Bei einer vorteilhaften Ausgestaltung der Membrananordnung kann anstelle der Membranlänge und der Membranbreite, die Querschnittsfläche der Berstmembran im Verhältnis zur Querschnittsfläche der Schmalseite zur Dimensionierung der Berstmembran herangezogen werden. Hierfür kann die Querschnittsfläche der Berstmembran beispielsweise in einem Bereich eines 0,1125-Fachen bis 0,24-Fachen der Querschnittsfläche der Schmalseite vorliegen. Die Schmalseite entspricht hier der Seite des Zellgehäuses in welche für die Positionierung der Berstmembran verwendet wird.

Nach einem weiteren Aspekt der Erfindung wird eine Batteriezelle mit einer erfindungsgemäßen Membrananordnung bereitgestellt. Das Zellgehäuse der Batteriezelle ist durch mindestens einen Zelldeckel fluiddicht verschlossen. Mindestens ein Elektrodenpaket ist in einem Innenvolumen des Zellgehäuses angeordnet.

Das Elektrodenpaket kann beispielsweise Anodenelektroden, Kathodenelektroden und Separatoren aufweisen, welche über entsprechende Ableiter mit Batteriepolen elektrisch verbunden sind. Die Anodenelektroden, Kathodenelektroden und Separatoren können beispielsweise in Folienform gestapelt oder gewickelt sein und somit Elektrodenpakete bilden. Ein oder mehrere derartiger Elektrodenpakete können in dem Innenvolumen des Zellgehäuses angeordnet sein. Weiterhin kann ein Elektrolyt oder eine Elektrolytlösung in dem Innenvolumen des Zellgehäuses vorgesehen sein.

Das Zellgehäuse weist eine prismatische Form auf. Insbesondere kann die prismatische Form des Zellgehäuses eine beliebige vieleckige Grundfläche aufweisen. Beispielsweise kann die Grundfläche rechteckig, quadratisch und dergleichen ausgestaltet sein. Dabei kann die Grundform eine Schmalseite des Zellgehäuses ausbilden. Mindestens zwei Mantelflächen der prismatischen Form können als Seitenflächen des Zellgehäuses ausgestaltet sein.

Die Berstmembran ist entsprechend einer Ausführungsform in eine Öffnung des Zellgehäuses eingebracht oder verdeckt entsprechend einer alternativen oder zusätzlichen Ausführungsform eine Öffnung des Zellgehäuses. Diese Maßnahme ermöglicht eine flexible Befestigung der Berstmembran an dem Zellgehäuse. Dabei können verschiedene Verfahren, wie zum Beispiel Schweißen, Pressen und dergleichen, zum Verbinden der Berstmembran mit dem Zellgehäuse eingesetzt werden. Entsprechend einer Ausgestaltung entspricht die Membranlänge und Membranbreite der Berstmembran im Wesentlichen einer Länge und Breite der Öffnung. Hierdurch kann die Dimensionierung der Öffnung als der maximal zulässige Strömungsquerschnitt der Berstmembran unabhängig von der Geometrie oder dem Design der Berstmembran bestimmt werden. Diese Maßnahme kann bei gleichbleibenden Komponenten der Batteriezelle ein nachträgliches Anpassen oder Verändern der Berstmembran ermöglichen.

Die Berstmembran kann hierbei hinter der Öffnung, auf der Öffnung, über der Öffnung, die Öffnung bereichsweise überlagernd bzw. überdeckend, in die Öffnung hineinragend, innerhalb der Öffnung, beispielsweise in die Öffnung hineingepresst, und dergleichen angeordnet sein.

Die Berstmembran kann intern bzw. im Innenvolumen des Zellgehäuses der Batteriezelle und/oder extern bzw. außerhalb des Innenvolumens des Zellgehäuses an mindestens einer außenseitigen Wandung angeordnet sein.

Die Berstmembran kann besonders präzise auf einen grenzwertigen Überdruck eingestellt werden, wenn diese mindestens eine Perforierung in Form einer Sollbruchstelle aufweist. Die mindestens eine Perforierung ist dazu eingerichtet, bei einem Auslösen der Berstmembran zu brechen und einen Querschnitt freizulegen.

Nach einer weiteren Ausführungsform entsprechen die Membranlänge und die Membranbreite einer Länge und einer Breite des freigelegten Querschnitts. Hierdurch kann auch bei einer in eine Zellgehäuse-Wandung integrierten und/oder eingeprägten Berstmembran eine relevante Querschnittsfläche der Berstmembran definiert werden.

Die Berstmembran kann technisch besonders optimal an einen externen Ausleitkanal angeschlossen werden, wenn die mindestens eine Perforierung in mindestens eine Schmalseite des Zellgehäuses eingebracht ist.

Gemäß einer weiteren Ausführungsform weist das Zellgehäuse eine Breite und eine Länge mit einem relativen Verhältnis zueinander innerhalb eines Bereichs von 0,05 bis 0,15, einschließlich 0,05 und 0,15, auf. Entsprechend einer weiteren Ausführungsform weist das Zellgehäuse eine Breite und eine Höhe mit einem relativen Verhältnis innerhalb eines Bereichs von 0,18 bis 0,3, einschließlich 0,18 und 0,3, auf. Durch diese Maßnahmen kann ein Zellgehäuse mit einer Dimension, insbesondere in Form von relativen Verhältnissen zwischen der Höhe, Breite und Länge des Zellgehäuses, bereitgestellt werden, welches mechanisch besonders robust ausgebildet ist und technisch einfach herstellbar ist.

Nachstehend werden mehrere Ausführungsbeispiele der Erfindung anhand der Zeichnungen näher erläutert. Es zeigen:

Fig. 1 eine perspektivische Darstellung einer Membrananordnung gemäß einer Ausführungsform der Erfindung,

Fig. 2 eine Schnittdarstellung eines bodenseitigen Abschnitts einer Batteriezelle mit einer Membrananordnung aus Fig. 1, und

Fig. 3 eine Schnittdarstellung eines bodenseitigen Abschnitts einer Batteriezelle mit einer Membrananordnung gemäß einer weiteren Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

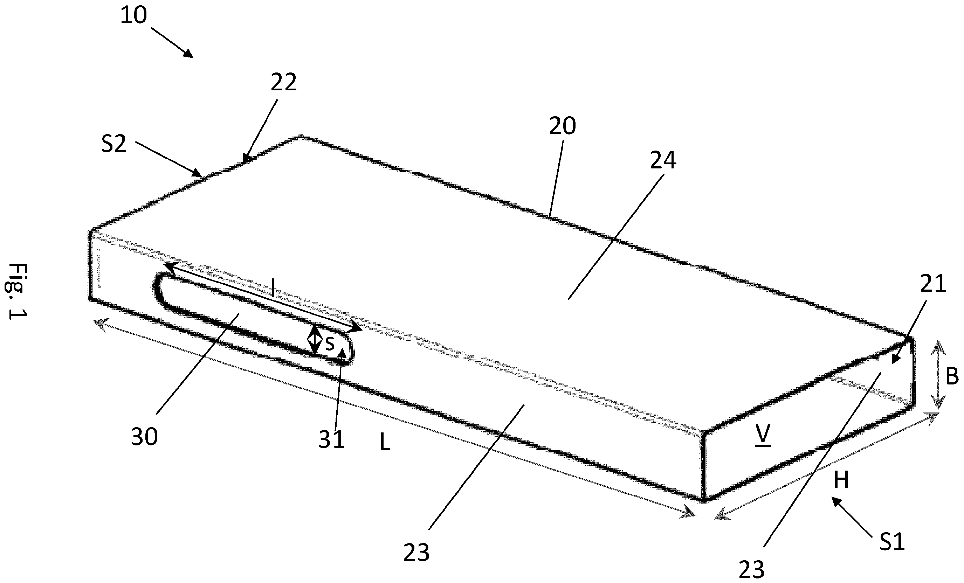

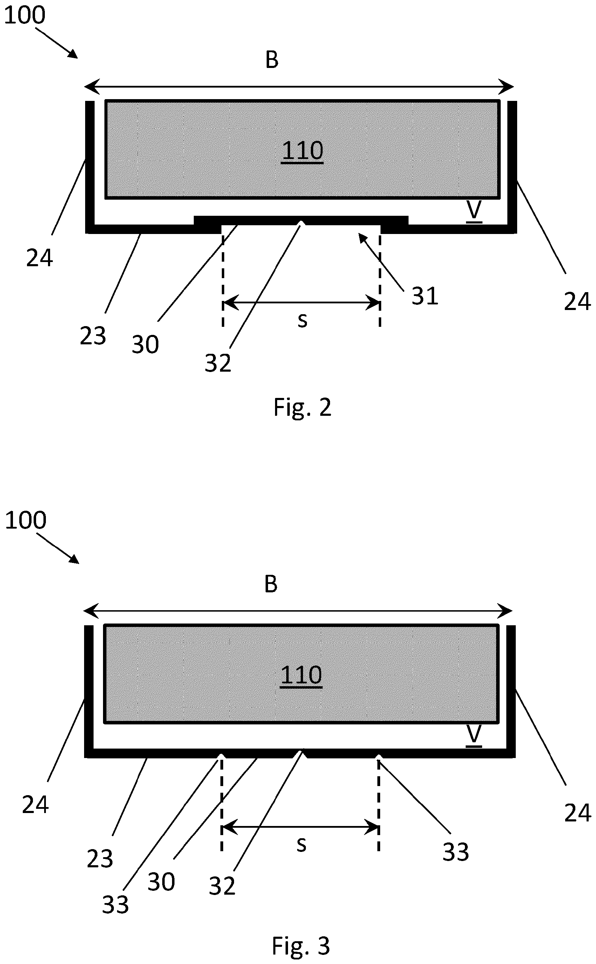

Die Fig. 1 zeigt eine perspektivische Darstellung einer Membrananordnung 10 gemäß einer Ausführungsform der Erfindung. Die Membrananordnung 10 ist vorteilhafterweise für den Einsatz in Batteriezellen 100 eingerichtet, welche beispielhaft in der Fig. 2 gezeigt ist.

Die Membrananordnung 10 weist ein Zellgehäuse 20 mit einer prismatischen Form auf und ist beispielhaft aus einer Aluminiumlegierung hergestellt. Das Zellgehäuse 20 weist im dargestellten Ausführungsbeispiel eine rechteckige Prismenform auf und ist an zwei einander gegenüberliegenden Seiten S1, S2 durch Öffnungen 21, 22 geöffnet. Hierdurch können Komponenten der Batteriezelle 100 in ein Innenvolumen V des Zellgehäuses 20 eingebracht werden.

Das Zellgehäuse 20 weist zwei einander gegenüberliegende Schmalseiten 23 und zwei größer ausgestaltete Seitenflächen 24 auf. Das Zellgehäuse 20 weist eine Länge L, eine Breite B und eine Höhe H auf. Die Schmalseiten 23 sind im gezeigten Ausführungsbeispiel durch die Breite B und die Länge L definiert. Die Seitenflächen 24 sind durch die Höhe H und die Länge L definiert.

Eine beispielhaft bodenseitige Schmalseite 23 des Zellgehäuses 20 ist mit einer Öffnung 31 versehen, welche durch eine Berstmembran 30 verschlossen ist. Die Berstmembran 30 liegt beispielsweise in Form einer Platte innenseitig auf der Öffnung 31 auf. Je nach Ausgestaltung kann die Berstmembran 30 mit der Wandung der Schmalseite 23 verschweißt, verklebt, verkantet oder verlötet sein. Eine derartig in eine Öffnung 31 des Zellgehäuses 20 eingebrachte oder an der Öffnung 31 des Zellgehäuses 20 angeordnete Berstmembran 30 weist eine Membranlänge l und eine Membranbreite s auf, welche im Wesentlichen einer Länge und Breite der Öffnung 31 selbst entsprechen.

Bevorzugterweise ist die Öffnung 31 und damit auch die Berstmembran 30 entlang der Breite B zentriert und entlang der Länge L dezentriert bzw. seitlich versetzt angeordnet.

Die Berstmembran 30 weist eine Membranlänge l auf, welche einer 0,25-fachen bis 0,4-fachen Länge L des Zellgehäuses 20 entspricht. Weiterhin weist die Berstmembran 30 eine Membranbreite s auf, welche einer 0,44-fachen bis 0,6-fachen Breite B des Zellgehäuses 20 entspricht.

Eine Berstmembran 30 kann somit basierend auf den beiden nachfolgenden Verhältnissen besonders vorteilhaft ausgelegt bzw. dimensioniert werden.

$$0{,}44 \leq s/B \leq 0{,}6$$

$$0{,}25 \leq l/L \leq 0{,}4$$

Bei einem beispielhaften Zellgehäuse 20 mit einer Länge L von 270 mm, einer Breite B von 25 mm und einer Höhe H von 100 mm kann die Berstmembran 30 eine Membranbreite s von 11 mm bis 15 mm und eine Membranlänge l von 67,5 mm bis 108 mm aufweisen. Innerhalb dieses Wertebereichs, welcher die Grenzen des Wertebereichs ebenfalls umfasst, kann ein besonders optimaler Kompromiss zwischen der Stabilität des Zellgehäuses 20 und dem möglichst schnellem Druckabbau im Falle der Auslösung der Berstmembran 30 geschaffen werden.

Für eine optimale Ausbildung des Zellgehäuses 20 kann dieses ebenfalls mit Hilfe der folgenden Verhältnisse dimensioniert werden:

$$0{,}05 \leq B/L \leq 0{,}15$$

$$0{,}18 \leq B/H \leq 0{,}3$$

Ein entsprechendes Zellgehäuse 20 kann somit ein Breite-zu-Länge-Verhältnis B/L von beispielsweise 20/250, 30/300, 25/167 und dergleichen aufweisen. Entsprechend kann bei einer Breite B von 25 mm eine Höhe H des Zellgehäuses 20 in einem Bereich von 85 mm bis 140 mm, einschließlich 85 mm und 140 mm, gewählt werden.

In der Fig. 2 ist eine Schnittdarstellung eines bodenseitigen Abschnitts einer Batteriezelle 100 mit einer Membrananordnung 10 aus Fig. 1 gezeigt. Die Fig. 2 veranschaulicht die Ausbildung der Berstmembran 30 in Form einer Platte, welche an der Öffnung 31 des Zellgehäuses 20 angeordnet ist.

Die Berstmembran 30 kann generell ein beliebiges Design aufweisen. Dabei weist die Berstmembran 30 mindestens eine Perforierung 32 in Form einer Sollbruchstelle auf. Die Perforierung 32 ist dazu eingerichtet, bei einem Auslösen der Berstmembran 30 zu brechen und einen Querschnitt freizulegen. Im in Fig. 2 gezeigten Ausführungsbeispiel kann dieser Querschnitt durch die Maße der Öffnung 31 begrenzt sein.

Die Batteriezelle 100 weist nicht dargestellte Zelldeckel auf, welche die Öffnungen 21, 22 endseitig verschließen. In dem Innenvolumen V des Zellgehäuses 20 ist mindestens ein Elektrodenpaket 110 positioniert. Dabei kann auch ein Elektrolyt oder eine Elektrolytlösung im Innenvolumen V des Zellgehäuses 20 vorgesehen kann.

Die Fig. 3 zeigt eine weitere Schnittdarstellung eines bodenseitigen Abschnitts einer Batteriezelle 100 mit einer Membrananordnung 30 gemäß einer weiteren Ausführungsform der Erfindung. Im Unterschied zum in Fig. 2 gezeigten Ausführungsbeispiel ist die Berstmembran 30 in die bodenseitige Schmalseite 23 geprägt oder gestanzt. Somit ist die beispielhafte Perforierung 32 direkt in der Wandung der Schmalseite 23 ausgebildet.

Zum Begrenzen des Querschnitts der Berstmembran 30 im Falle eines Auslösens durch einen Überdruck im Innenvolumen V des Zellgehäuses 20 sind sekundäre Perforierungen 33 vorgesehen, welche beispielhaft die Membranbreite s und die Membranlänge I definieren.

Die Berstmembran 30 kann ein Design aufweisen, welches durch die Form, Ausdehnung und Anzahl von Perforierungen 30, 33 gebildet ist. Beispielsweise können die Perforierungen 30, 33 als ein Doppel-Y, einander berührende Kreise oder Halbkreise, ein oder mehrere einander schneidende oder parallel zueinander verlaufende Striche und dergleichen geformt sein. Mit Hilfe der oben beschriebenen Verhältnisse kann die Berstmembran 30 unabhängig von ihrem Design relativ zu den geplanten Abmessungen des Zellgehäuses 20 dimensioniert werden.

**Patentansprüche**

1. Membrananordnung (10) für eine Batteriezelle (100), aufweisend ein Zellgehäuse (20) mit einer prismatischen Form und eine Berstmembran (30), wobei das Zellgehäuse (20) zumindest zwei Seitenflächen (24) und zumindest zwei Schmalseiten (23) aufweist, wobei das Zellgehäuse (20) eine Länge (L), eine Breite (B) und eine Höhe (H) aufweist, und wobei die Berstmembran (30) eine Membranlänge (I) und eine Membranbreite (s) aufweist, wobei die Berstmembran (30) in oder an einer Schmalseite (23) des Zellgehäuses (20) positioniert ist, **dadurch gekennzeichnet, dass** die Berstmembran (30) eine Membranlänge (I) aufweist, welche einer 0,25-fachen bis 0,4-fachen Länge (L) des Zellgehäuses (20) entspricht und dass die Berstmembran (30) eine Membranbreite (s) aufweist, welche einer 0,44-fachen bis 0,6-fachen Breite (B) des Zellgehäuses (20) entspricht.

2. Membrananordnung nach Anspruch 1, wobei die Berstmembran (30) in eine Öffnung (31) des Zellgehäuses (20) eingebracht ist oder eine Öffnung (21) des Zellgehäuses (20) verdeckt, wobei die Membranlänge (I) und Membranbreite (s) der Berstmembran (30) im Wesentlichen einer Länge und Breite der Öffnung (31) entspricht.

3. Membrananordnung nach Anspruch 1 oder 2, wobei die Berstmembran (30) mindestens eine Perforierung (32, 33) in Form einer Sollbruchstelle aufweist, wobei die mindestens eine Perforierung (32, 33) dazu eingerichtet ist, bei einem Auslösen der Berstmembran (30) zu brechen und einen Querschnitt freizulegen.

4. Membrananordnung nach Anspruch 1, wobei die Membranlänge (I) und die Membranbreite (s) einer Länge und einer Breite eines bei einer Aktivierung der Berstmembran (30) freigelegten Querschnitts entsprechen.

5. Membrananordnung nach Anspruch 4, wobei die mindestens eine Perforierung (32) in mindestens eine Schmalseite (23) des Zellgehäuses (20) eingebracht ist.

6. Membrananordnung nach einem der Ansprüche 1 bis 5, wobei das Zellgehäuse (20) eine Breite (B) und eine Länge (L) mit einem relativen Verhältnis zueinander innerhalb eines Bereichs von 0,05 bis 0,15, einschließlich 0,05 und 0,15, aufweist.

7. Membrananordnung nach einem der Ansprüche 1 bis 6, wobei das Zellgehäuse (20) eine Breite (B) und eine Höhe (H) mit einem relativen Verhältnis innerhalb eines Bereichs von 0,18 bis 0,3, einschließlich 0,18 und 0,3, aufweist.

8. Batteriezelle (100), aufweisend eine Membrananordnung (10) gemäß einem der vorhergehenden Ansprüche, wobei ein Zellgehäuse (20) der Membrananordnung (10) durch mindestens einen Zelldeckel fluiddicht verschlossen ist, wobei mindestens ein Elektrodenpaket (110) in einem Innenvolumen (V) des Zellgehäuses (20) angeordnet ist.

Fig. 1

100

B

110

V

24

23    30

32

31

24

s

**Fig. 2**

100

B

110

V

24

23

33

30    32

33

24

s

**Fig. 3**

Europäisches
Patentamt

European
Patent Office

Office européen
des brevets

## EUROPÄISCHER RECHERCHENBERICHT

**Nummer der Anmeldung**

EP 24 17 2570

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 132477 A1 (AUDI AG [DE]) 15. Juni 2023 (2023-06-15) * Absätze [0020], [0037] - [0046]; Abbildungen 1-4 * ----- | 1-8 | INV. H01M50/103 H01M50/15 H01M50/342 |
| X | DE 10 2021 132478 A1 (AUDI AG [DE]) 15. Juni 2023 (2023-06-15) * Absätze [0001], [0007], [0009], [0042] - [0046]; Abbildungen 1,2 * ----- | 1-8 | |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 13. September 2024 | Mugnaini, Veronica |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 17 2570

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2024

| Im Recherchenbericht angeführtes Patentdokument | Datum der Veröffentlichung | Mitglied(er) der Patentfamilie | Datum der Veröffentlichung |
|---|---|---|---|
| DE 102021132477 A1 | 15-06-2023 | CN 116259890 A<br>DE 102021132477 A1<br>US 2023187737 A1 | 13-06-2023<br>15-06-2023<br>15-06-2023 |
| DE 102021132478 A1 | 15-06-2023 | CN 116259898 A<br>DE 102021132478 A1<br>US 2023187770 A1 | 13-06-2023<br>15-06-2023<br>15-06-2023 |

EPO FORM P0461

Für nähere Einzelheiten zu diesem Anhang : siehe Amtsblatt des Europäischen Patentamts, Nr.12/82